(19) Europäisches Patentamt
European Patent Office
Office européen des brevets

(11) **EP 2 251 625 A2**

(12) **EUROPEAN PATENT APPLICATION**

(43) Date of publication:
**17.11.2010 Bulletin 2010/46**

(51) Int Cl.:
*F25J 1/02* *(2006.01)*        *C09K 5/00* *(2006.01)*
*F25B 9/00* *(2006.01)*

(21) Application number: **10161956.7**

(22) Date of filing: **05.05.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **05.05.2009 US 435869**

(71) Applicant: **AIR PRODUCTS AND CHEMICALS, INC.**
**Allentown, PA 18195-1501 (US)**

(72) Inventors:
• **Roberts, Mark Julian**
  **Kempton, PA 19529 (US)**
• **Varma, Vishal Anandswarup**
  **Macungie, PA 18062 (US)**

(74) Representative: **Muir, Benjamin M. J.**
**Beck Greener**
**Fulwood House**
**12 Fulwood Place**
**London WC1V 6HR (GB)**

(54) **Pre-cooled liquefaction process of natural gas**

(57)    A system and method for liquefying a natural gas stream, the method including the steps of providing a dehydrated natural gas stream for liquefaction (100), pre-cooling the dehydrated natural gas stream in a pre-cooling apparatus (101), where the pre-cooling is performed by using a pre-coolant (162) that consists essentially of a hydrofluorocarbon (HFC) refrigerant, and further cooling the pre-cooled dehydrated natural gas stream (114) in a main heat exchanger (115) through indirect heat exchange against a vaporized hydrocarbon mixed refrigerant coolant (130) to produce a liquefied natural gas product stream (116), where the mixed refrigerant coolant comprises ethane, methane, nitrogen, and, preferably, less than or equal to 3 mol % of propane.

**FIGURE 1**

EP 2 251 625 A2

**Description**

BACKGROUND

Previously pre-cooled natural gas liquefaction processes were disclosed for use on Floating Production Storage and Offloading platforms (FPSO's) that used $CO_2$ to pre-cool a natural gas feed stream while a mixed refrigerant hydrocarbon mixture (HMR) was used to further cool the pre-cooled stream to provide a liquefied natural gas (LNG) product. In these processes, the natural gas feed stream is pre-cooled against boiling $CO_2$ at one or more pressure levels. The $CO_2$ vaporizes while pre-cooling the natural gas feed stream to a temperature of approximately -35°C. The $CO_2$ vapors are then compressed, cooled, and condensed to form the liquid $CO_2$ refrigerant to be re-circulated back into the process.

Using $CO_2$ as a precoolant for liquefaction of LNG on a FPSO, however, has several disadvantages. First, $CO_2$ has a freezing point of -56.6°C at which temperature dry ice formation begins to occur. To prevent operational issues associated with the formation of dry ice in a liquefaction plant, it has been suggested that the high pressure $CO_2$ preferably not be cooled below -40°C. Assuming that the high pressure $CO_2$ is cooled to -40°C and a temperature approach of at least 3°C, a natural gas feed cannot be cooled below -37°C when using $CO_2$ as a precoolant. Often, however, the natural gas feed must be pre-cooled to temperatures below -37°C in order to condense and remove heavy hydrocarbons and aromatics with the goal of reducing the heating value of the LNG product and/or preventing freeze-out of impurities such as benzene in the LNG product. Use of $CO_2$, therefore, may preclude the removal of required amounts of such impurities in the pre-cooling section.

Second, the critical temperature (i.e., the temperature above which a fluid cannot be condensed irrespective of pressure) of $CO_2$ is approximately 31.1°C, which means that $CO_2$ cannot be condensed above 31.1°C. A pre-cooling cycle, however, requires a condensed refrigerant which supplies refrigeration by boiling against a load stream. Traditionally FPSO's use sea water as a coolant supplied to compressor inter-coolers and after-coolers. Thus, if the sea water is warm, for example, 27°C, which is the typical surface water temperature in the tropical regions, and assuming a typical 10°C approach in the condenser, the $CO_2$ cannot be condensed using the mild sea water, thereby degrading the efficiency and limiting the applicability of $CO_2$ based cycles for latitudes with sea water below approximately 20°C.

Additionally, the $CO_2$ needs to be typically compressed to a pressure above approximately 52 bara for it to be efficiently condensed, which requires the use of special high pressure barrel type casing for the compressor. The use of special high pressure barrel type casings thereby raises the capital cost. Moreover, the overall pre-cooling loop works at much higher pressures than propane or hydrofluorocarbon based pre-cooling cycles. Thus, the whole system must be designed with high pressure piping, pressure relief devices, etc. that increase capital cost and increase gas pressure safety concerns, especially on an offshore platform where distances between equipment and personnel is much less than compared with land-based plants.

Pre-cooled natural gas liquefaction systems and processes for FPSO's that use propane ($C_3H_8$) to pre-cool a natural gas feed stream while a mixed refrigerant hydrocarbon mixture, which itself contains propane, further cools the pre-cooled stream to provide a liquefied natural gas product have also been disclosed. This type of process is known as the propane pre-cooled mixed refrigerant, or C3MR process, and is used to manufacture most of the LNG produced worldwide. In the pre-cooling loop, liquid propane is expanded to different pressures using Joule-Thomson (J-T) valves. The resulting boiling propane vaporizes against the natural gas feed stream to pre-cool the natural gas feed stream. The resulting propane vapors are fed to a propane compressor that compresses the vapor streams to a high pressure. The high pressure propane discharging from the compressor is cooled against sea water and re-circulated back into the pre-cooling process. Due to the high critical temperature of propane (96.6°C) versus $CO_2$ (31.1°C), propane provides high refrigeration duties for every megawatt of supplied compression power in comparison to $CO_2$. In the classic land-based plants, propane may also used in the mixed hydrocarbon refrigerant in order to provide efficient refrigeration in the liquefaction part of the process.

While propane has been widely used in land-based plants as a pre-cooling refrigerant, use of propane also has disadvantages for use on LNG FPSOs. Propane may leak from gas compressor seals, propane evaporators, and other points in the system that can lead to hazardous explosive conditions at and near the surface of the FPSO. Propane presents these hazardous explosive conditions due to its several unique properties. For example, propane has a normal boiling point of -42.1°C, which means that when propane leaks from any equipment, it remains a vapor. Propane's vapor density is 1.91 Kg/m$^3$ versus a density of air of 1.20 Kg/m$^3$ at 15°C. Propane's vapor density causes the leaked vapor to settle near the surface of the FPSO platform. The vapor has a low flammability limit of less than 9.5 volume % and the U.S. Department of Transportation lists propane as a flammable gas, while the European Commission labels propane as F+ or extremely flammable. Because the propane vapors settle to the floor or surface of the FPSO platform and because propane is extremely flammable, the presence of a propane "cloud" on the FPSO platform can be extremely hazardous.

Moreover, an FPSO is space-constrained and the average distance between equipment and personnel or living quarters is significant smaller than for a land-based plant. If a propane leak were to occur on an FPSO, the flammable propane vapors would likely propagate to all major areas of the FPSO in a short span of time, exposing the plant to explosion and/or fire risk.

This hazard potential became a reality on the Piper Alpha, an oil & gas platform processing propane condensate in the North Sea. On July 6, 1988, a back-up propane condensate pump which was allegedly under repair was accidentally started which led to the discharge of propane into the air just above the surface of the platform. The resultant leaked propane was accidently ignited and resulted in two very large explosions that immediately engulfed the control room and most of the ship. The accident resulted in 167 fatalities and the platform melted.

Use of propane as a refrigerant can, therefore, be extremely hazardous, especially since it will require propane inventories not just in the pre-cooling section but also in storage and in a de-propanizer column to extract the propane. In contrast, other hydrocarbons do not pose as great a threat as propane. Methane ($CH_4$) is, for example, lighter than air with a typical vapor density of 0.68 Kg/m$^3$ at 15°C. If methane were to leak on a FPSO platform, the methane would quickly dissipate in the air. Similarly, ethane ($C_2H_6$) has a density of 1.28 Kg/m$^3$ at 15°C, which is still close to the density of air, thus, reducing the hazard of flammable vapors gathering close to the FPSO surface.

Butanes ($C_4H_{10}$) typically have similar issues associated with propane. N-Butane, for example, has a normal boiling point of -0.5°C and a density of 2.52 Kg/m$^3$ at 15°C that could lead to the formation of explosive vapors on the FPSO surface. Butane, however, has a lower tendency to escape the equipment of the liquefaction plant due to its high density, which renders it inherently safer than propane. Heavier hydrocarbons (C5+) are primarily liquids at ambient atmospheric temperatures, and hence, any leaks will result in fewer vapors close to the FPSO surface.

Thus, due to its unique position amongst the group of aliphatic hydrocarbons, propane is considered the most hazardous of all aliphatic hydrocarbons, and it is desirable to avoid for use on LNG FPSOs.

There is, therefore, a need in the art for a process that provides the energy and capital cost efficiency of the C3MR process without exposing, or at least limiting the use of, flammable refrigerants on the FPSO. A pre-cooling refrigerant is needed that will have a critical temperature higher than 50°C, will have zero flammability potential, zero toxicity potential, low environmental impact, and a low normal boiling point that allows low pre-cooling temperatures.

BRIEF SUMMARY

Embodiments of the present invention satisfy this need in the art by providing an improved liquefaction system and method that utilizes a hydrofluorocarbon (HFC) to pre-cool a natural gas feed stream prior to liquefying the pre-cooled feed using a mixed refrigerant (MR).

In one embodiment, a method for liquefying a natural gas stream is disclosed, where the method comprises the steps of: providing a dehydrated natural gas stream for liquefaction; pre-cooling the dehydrated natural gas stream in a pre-cooling apparatus, wherein the pre-cooling is performed by using a pre-coolant that consists essentially of a hydrofluorocarbon (HFC) refrigerant; further cooling the pre-cooled dehydrated natural gas stream in a main heat exchanger through indirect heat exchange against a vaporized hydrocarbon mixed refrigerant coolant to produce a liquefied natural gas product stream, wherein the mixed refrigerant coolant comprises ethane, methane, nitrogen, and less than or equal to 3 mol % of propane.

In another embodiment, a system for liquefying a natural gas stream is disclosed, where the system comprises: a multistage hydrofluorocarbon (HFC) compressor; a pre-cooling apparatus fluidly connected to the multistage HFC compressor, the pre-cooling apparatus comprising at least one evaporator for pre-cooling a dehydrated natural gas stream using a HFC refrigerant; a main heat exchanger fluidly connected to the pre-cooling apparatus for further cooling the pre-cooled dehydrated natural gas stream to produce a liquid natural gas product stream, wherein a vaporized mixed refrigerant coolant comprising ethane, methane, nitrogen, and less than or equal to 3 mol % of propane provides refrigeration in the main heat exchanger.

In yet another embodiment, a method for liquefying a natural gas stream is disclosed where the method comprises the steps of: providing a dehydrated natural gas stream for liquefaction; pre-cooling the dehydrated natural gas stream in a pre-cooling apparatus, wherein the pre-cooling is performed by using a pre-coolant that consists essentially of a hydrofluorocarbon (HFC) refrigerant; further cooling the pre-cooled dehydrated natural gas stream in a main heat exchanger through indirect heat exchange against a vaporized hydrocarbon mixed refrigerant coolant to produce a liquefied natural gas product stream, wherein the mixed refrigerant coolant is a mixture comprising a methane stream derived from a natural gas stream, an ethane enriched stream, wherein the ethane enriched stream is predominantly ethane, and a nitrogen stream, wherein the nitrogen stream is predominantly nitrogen.

BRIEF DESCRIPTION OF THE DRAWINGS

The foregoing brief summary, as well as the following detailed description of exemplary embodiments, is better understood when read in conjunction with the appended drawings. For the purpose of illustrating embodiments of the invention, there is shown in the drawings exemplary constructions of the invention; however, the invention is not limited to the specific methods and instrumentalities disclosed. In the drawings:

Figure 1 is a flow chart illustrating an exemplary system and method involving aspects of the present invention;

Figure 2 is a flow chart illustrating an exemplary system and method involving aspects of the present invention;

Figure 3 is a flow chart illustrating an exemplary system and method involving aspects of the present invention;

Figure 4A is a flow chart illustrating an exemplary driver system and method involving aspects of the present invention; and

Figure 4B is a flow chart illustrating an exemplary driver system and method involving aspects of the present invention.

DETAILED DESCRIPTION

One embodiment of the invention concerns the development of cryogenic refrigeration for use in LNG liquefaction applications, and especially for use on offshore platforms based upon the use of both HFC's and hydrocarbon refrigerant mixtures. Safety is of paramount importance in the design of any offshore or floating hydrocarbon processing plant due to the compact layout, proximity of the living quarters to the process equipment, and the limited egress. Embodiments of the disclosed system and process achieve high power efficiency per tonne of product LNG, thus, eliminating the need for using flammable, but highly efficient refrigerants like propane.

In one embodiment, the highly flammable propane pre-cooling refrigerant used in the traditional C3MR process may be replaced with an HFC to pre-cool the natural gas feed before being further cooled using a hydrocarbon mixed refrigerant. The HFC used may be classified (class 1) by the American Society of Heating, Refrigerating and Air Conditioning Engineers (ASHRAE) as being non-toxic under 400 ppm and does not propagate a flame at 21°C and 1.01 bara, thus, rendering it safe for use in comparison to propane. ASHRAE classifies a refrigerant to be type 2 if it is flammable at concentrations greater than 0.1 $Kg/m^3$ at 21°C and 1.01 bara with a heat of combustion less than 19,000 KJ/Kg. ASHRAE classifies a refrigerant to be type 3 if it is flammable at concentrations below 0.1 $Kg/m^3$ at 21°C and 1.01 bara with a heat of combustion greater than 19,000 KJ/Kg.

The HFC will allow pre-cooling to temperatures lower than -37°C due to a lower normal boiling point for many of the HFC's. For example, R410A which is a binary mixture of R32 (difluoromethane) and R125 (pentafluoroethane) has a critical temperature of 70.1°C, classified as an A1 refrigerant by ASHRAE (low toxicity and no flammability potential), has an ozone depletion potential (ODP) of zero, and a normal boiling point of -51.6°C. The ODP is the tendency of a molecule to react and destroy atmospheric ozone relative to dichlorodifluoromethane ($CCl_2F_2$) which is assigned an ODP of 1.0 as per the provisions of the Montreal protocol (1987). Refrigerants with a lower ODP are, thus, more desirable.

Another benefit of using HFC's as a pre-cooling refrigerant is that it allows removal of propane from the mixed refrigerant maintaining close to the same energy efficiency of producing LNG. This allows for an HFC pre-cooled mixed refrigerant process that eliminates the use of propane, offering about the same efficiencies as a land based plant, and at the same time, allowing a high amount of operating flexibility in the liquefaction process due to the low boiling temperatures of HFC's.

Use of an HFC refrigerant can lead to efficiencies as high as or even higher than the traditional C3MR process. Further, several mainstream commercially available HFC's allow pre-cooling to temperatures as low as -127°C without any possibility of freeze-out. Moreover, the critical temperature of most commercially known HFC's is much higher than $CO_2$, and hence HFC's may be used with high process efficiency under most typical sea water temperature conditions.

Another benefit of using HFC's over propane is the ability of several HFC's to be flashed down to vacuum (sub-atmospheric) pressure levels to achieve very low pre-cooling temperatures, thus, having the ability to condense enough hydrocarbons from the feed. If propane is flashed down to sub-atmospheric levels to achieve low temperatures (i.e., below -42°C), air ingress into the compressor suction line, for example, can potentially lead to explosive mixtures. Since HFC's like R410A and R134A, for example, are non-flammable, air ingress will not lead to flammable mixtures, which is why it is acceptable to flash down to sub-atmospheric levels.

Due to the feasibility of reaching colder pre-cooling temperatures, it is also possible, or nearly possible, to eliminate the propane from the main mixed refrigerant loop while still maintaining an acceptable commercial efficiency. The mixed refrigerant used for liquefaction may comprise nitrogen, methane, and ethane, for example. Theoretically, the mixed refrigerant should contain zero mole % propane, however, practically, elimination of all propane in the mixed refrigerant may not be economical or commercially feasible.

The methane for the mixed refrigerant may be produced on-site. The ethane used for preparing the mixed refrigerant may be sourced from commercial vendors, for example, or may also be prepared on-site. Whether sourced externally or produced on-site, ethane is typically produced as the overhead product from a de-ethanizer column. In practice, the purity of ethane from a de-ethanizer column is limited by the number of stages in the column and the reflux ratio. Production of high purity ethane requires a large number of stages in the distillation column and/or a high reflux ratio leading to increases in capital and operating costs. Thus, in practice a small amount of propane may be included in a commercial ethane product stream.

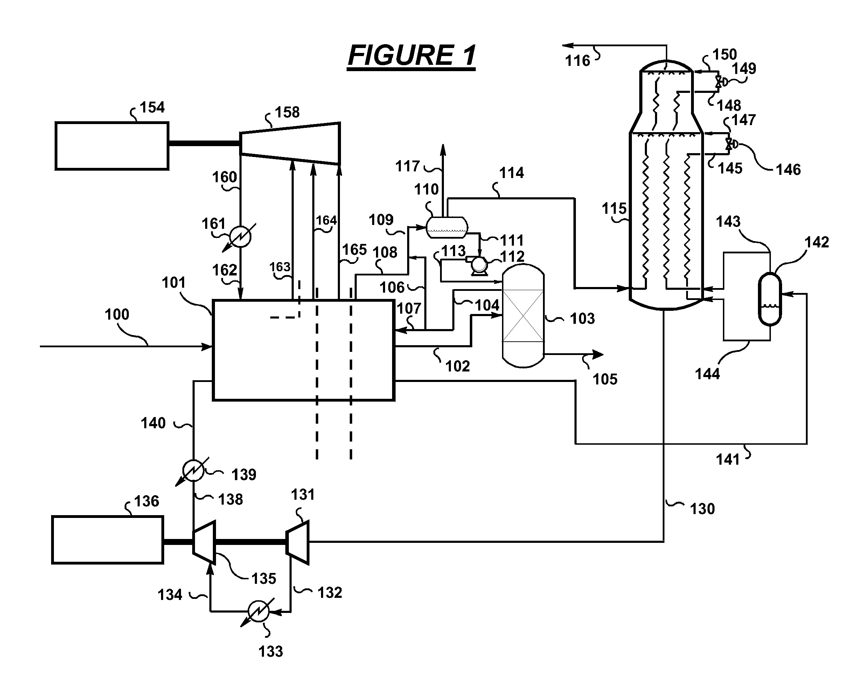

The methane required for the mixed refrigerant is typically extracted as a vapor stream (see stream 117 of Figure 1) emerging from a scrub column reflux drum (see item 110 from Figure 1). The propane content in the methane stream 117 is a function of the temperature of the pre-cooled feed stream 108 (referring to Figure 1). As the temperature of the pre-cooled stream 108 decreases, more propane condenses in the reflux drum 110 that leads to lower propane content in overhead streams 117 and 114. Hence, if lower propane content is desired in the methane stream used to prepare the mixed refrigerant, then a lower pre-cooling temperature is needed. Methane can also be procured from the dehydrated feed gas. In either case, the methane makeup stream will also typically contain some ethane and propane as impurities, depending on the plant operation and the composition of the natural gas feed.

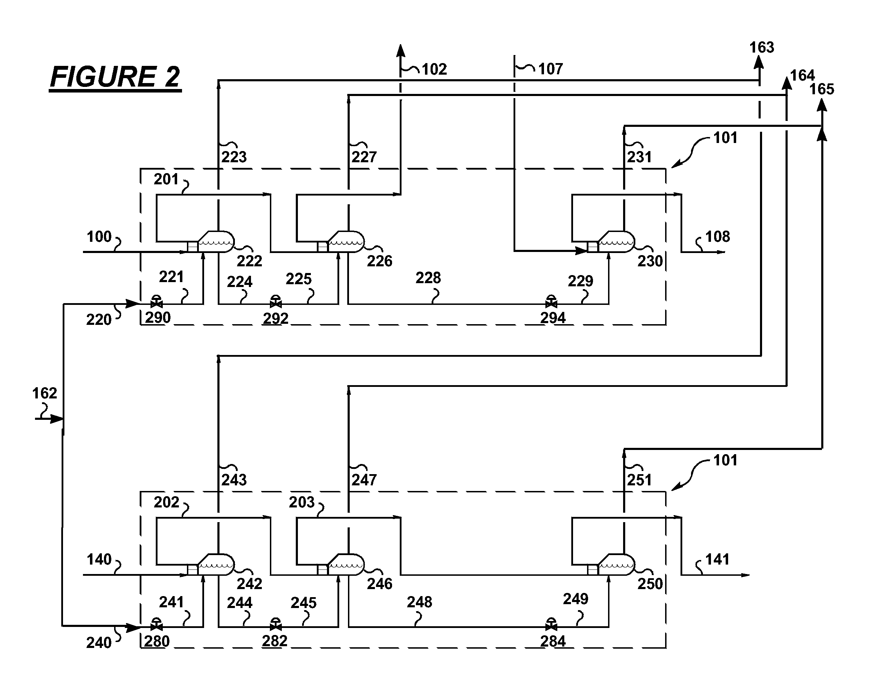

Thus, both sources of methane and ethane contain small quantities of propane. For example, as per Figures 2-3 of the Gas Processors Supplier Association (GPSA) Engineering Data Book (FPS Version, vol. I, 11th ed., 1998) commercially available high purity ethane commonly contains about 4 mole % propane and may contain up to 10.7 mol % propane. Table 1 shows the variation of propane content in a typical mixed refrigerant (where the mixed refrigerant comprises 16.6 mole % $N_2$, 40.99 mole % methane, and 42.4 mole % of ethane). For example, if less than 2.0 mole % of propane is desired in the mixed refrigerant for safety or other purposes, then either a methane stream of less than 1.0 mole % propane would have to be used or the ethane stream would need to contain less than 4 mole % propane. In this case, ethane from a high purity de-ethanizer column may be preferred over the commercial grade ethane.

**Table 1**

| Mole % Propane in Methane | Mole % Propane in Mixed Refrigerant Using On-site Ethane With 1% Propane | Mole % Propane in Mixed Refrigerant Using Commercial High Purity Ethane Containing 4% Propane |
|---|---|---|
| 0.50 | 0.63 | 1.90 |
| 1.00 | 0.83 | 2.11 |
| 1.50 | 1.04 | 2.31 |
| 2.50 | 1.45 | 2.72 |
| 2.66 | 1.51 | 2.79 |
| 3.00 | 1.65 | 2.93 |
| 3.19 | 1.73 | 3.00 |

Pre-cooling to lower temperatures reduces the heat removal load on the mixed refrigerant loop. This results in both capital and operating cost reductions; mixed refrigerant loop equipment such as cryogenic heat exchangers and mixed refrigerant compressors are generally more capital intensive than pre-cooling equipment. This is because the mixed refrigerant loop heat exchangers are more elaborately designed to withstand cryogenic conditions and also because mixed refrigerant compressors operate at several times higher pressures than pre-cooling compressors leading to thicker walled piping and equipment. Hence, reducing the load on the mixed refrigerant loop leads to net capital cost savings. Further, the mixed refrigerant loop requires higher energy consumption from the compressors for every KW of heat removed versus the pre-cooling loop. This is because, the average compressibility factors of pre-cooling refrigerants like HFC's and propane is much lower than that of a typical mixed refrigerant. Hence, shifting heat removal load to the pre-cooling loop provides net reduction in total compression power leading to operating cost benefits. Propane does not, however, provide the flexibility to shift duty to the pre-cooling loop due to its relatively high normal boiling point (-42.4°C) in comparison to HFC's like R410A (-51.6°C), and the hazard associated with vacuum operation. Elimination, or near elimination of propane as a refrigerant everywhere in the plant, along with any associated equipment costs and hazards of storing and producing propane, will lead to a significantly safer and more economical liquefaction system.

HFC refrigerants that are either single component refrigerants or refrigerant mixtures may be used for pre-cooling. Single component HFC refrigerants, such as R134a, have been widely used in the automobile and other refrigeration industries, for example. Only a few single component HFC refrigerants, however, satisfy the multiple constraints of being stable, being low flammable, having low ozone depletion potentials of less than 0.1, and having a low global warming potential with efficient thermodynamic characteristics of low condensing pressures and low normal boiling points. Hence, mixtures are widely considered as potential candidates for HFC refrigerants.

A wide range of commercial HFC's are available allowing high flexibility in setting pre-cooling temperatures. For example, if the LNG has to be stripped of heavier hydrocarbons (often to control its heating value), the feed may need to be pre-cooled to temperatures below -40°C. Commercially available HFC's like R-410A can be readily used to pre-cool the feed to temperatures of, for example, -48°C, at very high efficiencies. In contrast, $CO_2$ could not be used as a pre-coolant in this situation because of the possibility of freeze-out.

HFC refrigerant mixtures considered to have low "temperature glide" varying between 0-7°C, may be used as the pre-coolant. The temperature glide is the temperature difference between the bubble and the dew point temperatures and is due to the change in composition as a mixture boils gradually moving towards heavier components as the more volatile components boil out. Refrigerant mixtures with very small temperature glides (0-0.1°C) act like single components and are termed "azeotropic mixtures" while mixtures with low temperature glides (i.e., less than 1°C) have been termed "near-azeotropes." For example, The HFC mixture R-410A has a temperature glide of less than 0.1°C.

Low temperature glide refrigerants have several benefits. First, low temperature glide refrigerants avoid composition change so that the whole refrigeration circuit, including the equipment, may be designed for a uniform composition. In addition, leakage of a low or zero temperature glide refrigerant will result in minimal or zero change in the composition of the refrigerant contained in the pre-cooling system.

Second, near-azeotropes or azeotropes refrigerants behave differently from their individual components. For example, R-410A which is a 50/50 by weight near-azeotropic mixture of R32 and R125, has a low flammability, even though R32 by itself is flammable.

Third, an azeotrope refrigerant will maintain its molecular weight as the mixture is evaporated at various pressure levels. Thus, vapors entering a compressor at different pressure levels have the same molecular weight. In contrast, using HFC's with large temperature glides may lead to vapors with higher molecular weights to enter the compressor, which could lead to unpredictable behavior of the compressor unless robust composition control schemes are deployed.

One point that must be addressed when pre-cooling with an HFC refrigerant on a FPSO is the need for full pressure re-starting of the HFC refrigerant compressor. Many land-based LNG plants use single shaft "frame" type gas turbines to drive the refrigerant compressors in conjunction with large electric starter/helper motors. Even with large starter/helper motors, these plants still require a large percentage of the refrigerant inventory to be vented before re-starting the compressor. This is necessary to reduce the power/torque requirements of the turbine and starter/helper motor to a level low enough to start the drive train. The drive train usually consists of one or more compressors and a driver which are all mechanically connected. Venting is not an acceptable economic option with an HFC pre-cooled LNG plant, particularly one located offshore, because the refrigerant is expensive to purchase and transport, and storage of the HFC would take up valuable space on an FPSO. To meet the requirements of a full pressure start without venting, the driver has to be capable of providing the torque necessary to accelerate the drive train to full speed under load. This can be done with an electric motor drive, a multi-shaft frame, or multi-shaft aero derivative gas turbine as they all have adequate torque capability. The requirement of not venting the HFC's in an LNG liquefaction system using HFC pre-cooling cannot likely be met with a single shaft gas turbine based drive train without an exceptionally large starter/helper motor and the power generation equipment required to power it. This configuration would not be an economical solution since it would require a large investment in equipment that would, at most, be used occasionally when the plant is re-started.

Figure 1 illustrates a liquefaction system and process including two refrigeration circuits according to one aspect of the current invention. One or more refrigeration circuits may be added to the circuits already illustrated in Figure 1. The first, warm, or pre-cooling refrigeration circuit utilizes an HFC refrigerant. The second, cool, or main cooling refrigeration circuit utilizes a hydrocarbon mixture. The first refrigeration circuit using HFC as a pre-cooling refrigerant comprises a multi-stage HFC compressor 158 and a HFC pre-cooling apparatus 101. The HFC used in the first refrigeration circuit may preferably have the following properties: (1) be an ASHRAE Class A (low toxicity) refrigerant; (2) be an ASHRAE Class 1 (low flammability) refrigerant; (3) have an ODP not exceeding 0.1 (very low ozone depleting). The ODP of a molecule compares its ozone destroying tendency with that of dichlorodifluromethane ($CCl_2F_2$) as per the provisions of the Montreal protocol; and (4) have as low a Global Warming Potential (GWP). It should be noted, however, that the extremely low likelihood of large scale emissions under normal operating conditions, the energy savings, and the consequent reductions in $CO_2$ emissions imply that the GWP criterion is only qualitative.

The HFC used in the first refrigeration circuit may also preferably have the following properties: (1) for HFC mixtures, the refrigerant preferably would have a temperature glide of less than 7°C which is satisfied by azeotropic or near-azeotropic HFC mixtures; (2) the HFC component or mixture would have a critical temperature higher than 50°C (allowing use of ambient air as coolant in addition to sea water, thus, imparting a higher efficiency); and (3) having normal boiling points that are low enough to pre-cool the natural gas feed to the desired temperature. For example, R410A has a normal boiling temperature of -51.6°C even without vacuum operation, which may allow for sufficient removal of heavy hydrocarbons from the natural gas feed using fractionation.

Commercially available single component HFC's like R134a, R125, and all others bearing the above properties qualify for use in the current invented process for LNG liquefaction. Also commercially available HFC mixtures like R407C, R410A, R417A, R507, and R422D satisfy the above requirements.

Table 2 provides a summary of other potential pure and mixture HFC's that are classified as A1 (i.e., no toxicity below 400 ppm and no flame propagation potential), with close to zero ODP, and that can be used for LNG pre-cooling service.

**Table 2**

| Refrigerant Type | Composition | ODP | Critical Temp (°C) | ASHRAE Safety Classification |
|---|---|---|---|---|
| R134a | $CF_3CH_2F$ | 0 | 100.9 | A1 |
| R125 | $CF_3CHF_2$ | 0 | 66.1 | A1 |
| R407C | R32/R125/R134a | 0 | 87.3 | A1 |
| R410A | R32/R125 | 0 | 70.1 | A1 |
| R507 | R143A/R125 | 0 | 70.9 | A1 |

Returning to Figure 1, a natural gas feed stream (not shown) is pre-treated for removal of heavy hydrocarbon oils, particulates, $CO_2$, and $H_2S$ before being sent to driers (not shown). Drying may be performed using sea water cooling if the sea water is substantially below 22°C or can be performed using the HFC refrigerant. After cooling the natural gas feed stream to a temperature between 22-25°C, the natural gas feed stream is then sent to drier beds where moisture is removed (not shown). The dehydrated natural gas feed stream 100 is then sent to be pre-cooled at pressures ranging between 30-85 bara. Pre-cooling of dehydrated natural gas feed stream 100 is performed in 1-5 cooling stages in series, for example, represented by the pre-cooling apparatus 101. Figure 1 illustrates a 3-stage pre-cooling system. These serial cooling stages use an HFC refrigerant at sequentially descending temperatures by lowering J-T valve pressures making the HFC refrigerant supplied to the cooling stage (n) colder than that supplied to the cooling stage (n-1), for example. The greater the number of cooling stages, the greater the efficiency of pre-cooling due to close approaches of the cooling curve. If there are a total of (n) HFC pre-cooling stages, then the feed cools in (n-1) stages to yield the pre-cooled stream 102.

Pre-cooled stream 102 may then be sent to a hydrocarbon scrub column 103 which scrubs away heavier ($C_3$+) components of the feed using a cold liquid reflux stream 113 in order to adjust the heating value of the final LNG. A bottoms stream 105 is sent either to a fractionation train or to storage (not shown). It should be noted that due to space constraints on FPSOs, the heavy hydrocarbon stream 105 exiting the scrub column 103 may be potentially shipped and fractionated at a LNG receiving terminal. If fractionation is undertaken on the FPSO platform, one aspect of the current invention also allows for the HFC refrigerant to supply refrigeration to condensers of the various columns (such as a de-ethanizer) that may be involved in a fractionation train.

Stream 104, taken from the scrub column 103, constitutes the lighter overhead stream. Part of stream 104 (i.e., stream 107) may be partially condensed using the HFC pre-cooling apparatus 101. The partially condensed feed stream 108 may then be combined with the uncondensed portion of stream 104 (i.e., stream 106) to form stream 109 and then sent to a vapor-liquid separator 110 which disengages the vapor from the liquid. The liquid stream 111 from the vapor-liquid separator 110 may then be pumped in pump 112 back into scrub column 103 as stream 113 to act as the column reflux.

The HFC pre-cooling refrigerant may be used to supply all of the scrub column reflux condenser 110 duty without the need to use the main liquefaction refrigerant for such purpose. Using the HFC pre-cooling to supply all of the scrub column reflux condenser 110 duty will improve the efficiency of the system since typically cooling duties supplied by the typical hydrocarbon refrigerants require much higher incremental compression power than the HFC refrigerant. This is because of the significantly lower compressibility factors of typical HFC's when compared with lighter hydrocarbon refrigerants like $CH_4$ and $C_2H_6$. Use of the HFC pre-cooling to supply all of the scrub column reflux condenser 110 duty also reduces the size of the main liquefaction exchanger 115 and simplifies control issues and plant layout.

Vapor stream 114 from the scrub column reflux condenser 110 may be sent to the cryogenic section of the plant that fully condenses and sub-cools vapor stream 114 to form LNG product stream 116. The cryogenic section comprises the main liquefaction exchanger 115. In the cryogenic section, either a refrigerant consisting of mixed hydrocarbons with 0-30 mole% $N_2$ or pure $N_2$ may be used, for example. In one embodiment, the main liquefaction refrigerant may be a mixture containing 0-30% $N_2$ and hydrocarbons such as methane (0-50%), ethane (0-75%), and butanes (0-50%). In another embodiment, the main liquefaction refrigerant may be a mixture comprising a first stream of methane derived from a natural gas stream, a second stream, where the second stream is an ethane enriched stream that is predominantly ethane, and a third stream, where the third stream is a nitrogen enriched stream that is predominantly nitrogen. The methane stream can be derived from natural gas in one of two ways. If natural gas stream 100 (illustrated in Figure 1) is lean (i.e., contains more than 90 mole % methane and less than 3 mole % propane) then a part of that stream may be used to make up the mixed refrigerant. If natural gas stream 100 (of Figure 1) is not lean (i.e., contains more than 3 mole % propane) then it may be pre-cooled against the HFC in pre-cooling apparatus 101, scrubbed in a scrub column 103 (of Figure 1) that removes excess propane and other heavier hydrocarbons, and pre-cooled further to produce the methane make up stream 117 (of Figure 1). This procedure ensures that the methane make up stream used to make the mixed refrigerant contains low enough amounts of propane for safety.

With respect to the ethane enriched stream, predominately, as used herein, is defined as meaning that the stream comprises at least 90 mole % ethane. Commercial high purity ethane may contain up to 10 mole % propane while on-site prepared ethane may have a purity much higher than 90 mole % ethane. Thus, the minimum purity of the ethane enriched stream is 90 mole % ethane.

With respect to the nitrogen enriched stream, predominately as used herein, is defined as meaning that the stream comprises at least 97 mole % nitrogen and a dew point lower than -40°C. Packaged nitrogen generator units based upon membrane separation of air have been commonly used in marine applications to provide at least 97 mole % nitrogen stream. Up to 99.99 mole % purity of nitrogen may be achieved with these units in an economical fashion. The membranes are typically operated at air feed pressures of less than 14 bara and temperatures of less than 50°C.

The use of propane, which is considered to be unfavorable for use on the FPSO due to the possibility of formation of flammable clouds at surface level, may be eliminated, or nearly eliminated when using HFC's as a pre-coolant.

The main liquefaction exchanger 115 may be a wound coil exchanger, a plate-fin exchanger, or any other exchanger typical for cryogenic service. Vapor stream 114 may enter the main liquefaction exchanger 115 where it is condensed and sub-cooled and exits as LNG product stream 116 at a temperature between -140°C to -170°C and pressure between 30-85 bara, for example.

The condensed and sub-cooled LNG product stream 116 may be further processed by reducing its pressure in a liquid expander (not shown) or a flash valve (not shown) to around 1.2 bara, forming flash gas and a liquid LNG product. The LNG product may be subsequently sent to storage, for example.

The low pressure, warm main liquefaction refrigerant stream 130 may be sent to a sequence of inter-cooled compressors 131, 135 where the stream 130 is first compressed in compressor 131 to form stream 132, cooled in intercooler 133 to form stream 134, further compressed in compressor 135 to form stream 138, and then further cooled in aftercooler 139 to emerge as a high pressure fluid stream 140. Compressors 131 and 135 are driven by driver 136. Driver 136 can be an electrical motor or a gas turbine. High pressure fluid stream 140 may be at pressures ranging between 30-80 bara and a temperature dictated by: (1) the coolant used in the intercooler 133 and aftercooler 139; and (2) the size of the intercooler 133 and aftercooler 139. While Figure 1 illustrates the mixed refrigerant compression system having one intercooler 133 and one aftercooler 139, multiple intercoolers and aftercoolers may be implemented, for example. The coolant used in the intercooler 133 and aftercooler 139 may be air, or typically for FPSO applications, sea water, or fresh water, which is in turn cooled by sea water, for example.

The cooled high pressure refrigerant stream 140 may be pre-cooled using pre-cooling apparatus 101 resulting in pre-cooled stream 141. Pre-cooled stream 141 may be separated into lighter refrigerant stream 143 and heavier refrigerant stream 144 in separator 142. The lighter refrigerant stream 143 may then be condensed and sub-cooled in the main liquefaction exchanger 115 to form stream 148, expanded in J-T valve 149 to generate cryogenic refrigerant stream 150 having a temperature between -180°C to -120°C, before it is then vaporized in the main liquefaction exchanger 115. The heavier refrigerant liquid stream 144 may also be sub-cooled in the main liquefaction exchanger 115 to form stream 145 where it may then be expanded in J-T valve 146 to generate cryogenic refrigerant stream 147 to also be vaporized in the main liquefaction exchanger 115. The current process may also include a hydraulic expander (not shown) before J-T valve 146 to improve efficiency.

The combined cryogenic refrigerant streams 147, 150 boil at successively higher temperatures while flowing down the main liquefaction exchanger 115 before eventually exiting the exchanger as the vapor stream 130 at or slightly above dew point thereby completing the refrigeration loop.

Figure 2 illustrates the internals of pre-cooling apparatus 101 comprising one or more HFC evaporators. HFC evaporators 222, 226, 230 are used to cool the dehydrated natural gas feed stream 100 to approximately -100°C to 0°C. The evaporators may be shell-and-tube type exchangers, for example. Shell-and-tube type exchangers are also commonly termed "kettles" since the shell side consists of a pool of boiling HFC refrigerant. The HFC refrigerant stream 162 (also illustrated in Figure 1) may be saturated or preferably sub-cooled HFC liquid at a temperature determined by the air or sea water coolant as well as the condenser and sub-cooler size. For example, typical sea water cooled in FPSO applications may cool the HFC discharge from multi-stage HFC compressor 158 to 5-20°C above sea water temperatures.

The high pressure, sub-cooled HFC stream 162 may be split up into streams 220, 240. Stream 220 may provide the cooling to the dehydrated natural gas feed stream 100 while stream 240 may provide the cooling to the mixed refrigerant stream 140. Stream 220 may be subsequently expanded in a J-T valve 290 to form stream 221 and then sent to the boiling pool of liquid in evaporator 222. The HFC saturated vapor stream 223 exiting evaporator 222 may be combined with the saturated vapor stream 243 arising from evaporator 242 and the combined stream 163 (also illustrated in Figure 1) may then be sent as a side-stream to the highest pressure suction nozzle of the multi-stage HFC compressor 158 of Figure 1. The HFC liquid in 222 which has not boiled away may be sent via stream 224 to another pressure letdown J-T valve 292 further reducing its pressure and temperature resulting in stream 225. The boiling liquid stream 225 may be sent to evaporator 226 where it supplies further refrigeration to stream 201. The vapor stream 227 arising from evaporator 226 may be combined with vapor stream 247 arising from evaporator 246 and the combined stream 164 (also illustrated in Figure 1) is sent as a side-stream to the mid-pressure suction nozzle of the multi-stage HFC compressor 158. The liquid from 226 as stream 228 may be further flashed in a J-T valve 294 resulting in boiling stream 229 and sent to the boiling pool of liquid in evaporator 230 where it may be evaporated completely to form saturated vapor stream 231. Saturated vapor stream 231 may be combined with the vapor stream 251 arising from the evaporator 250 and the combined stream 165 (also illustrated in Figure 1) may be sent to the low pressure suction inlet of the multi-stage HFC compressor 158.

Evaporator 230 acts as the condenser for the scrub column 103. The temperature of the boiling liquid in evaporator 230, the outlet pressure of the final J-T valve 294, as well as the HFC itself may be decided by several criteria. For example, it is typical to limit the Higher Heating Value (HHV) of the LNG that requires the generation of sufficient reflux into the scrub column 103 which in turn requires sufficiently low boiling temperatures in evaporator 230. Typically, this temperature varies between -20°C to -80°C although there may be exceptions where this temperature may be outside of this range. For example, refrigerants like R-410A when flashed down to a minimum allowable pressure of around 1.25 bara provide a temperature of around -50°C. In this case, the final pre-cooling temperature of about -47°C may be reached at the outlet of evaporator 230. HFC's can also be safely used at sub-atmospheric pressures to achieve even lower temperatures. One reason this is possible, unlike propane, is that air-HFC mixtures are non-flammable, so that even with some air ingress, no flammability concerns arise. Selection of the HFC refrigerant, therefore, can also be governed by the final pre-cooling temperature that needs to be attained to condense enough hydrocarbons out of the feed gas.

Similar to the pre-cooling of the dehydrated natural gas feed stream 100 above, evaporators 242, 246, 250 may be used to pre-cool the hydrocarbon mixed refrigerant stream 140 to yield a pre-cooled stream 141. The pre-cooled temperature of evaporator 242 may be identical to evaporator 222, the temperature of evaporator 246 may be identical to evaporator 226, and the temperature of evaporator 250 may be identical to evaporator 230. In general, if there are (n) cooling stages, the boiling temperature of the HFC in any pre-cooling stage (k) will be identical for both the feed and hydrocarbon mixed refrigerant evaporators. In this way, the saturated HFC vapor leaving both the feed and hydrocarbon mixed refrigerant evaporator in any given pre-cooling stage will be at identical pressures. This allows the vapor streams to be mixed and sent to a single compressor stage, hence reducing the number of compressor inlet nozzles.

Another advantage of using HFC's as the precoolant is that HFC's have a critical temperature that exceeds 50.0°C. Because the HFC's critical temperature exceeds 50.0°C, the HFC condenser 161 (illustrated in Figure 1) following the multi-stage HFC compressor 158 does not operate in the supercritical region. Because the HFC condenser 161 following the multi-stage HFC compressor 158 does not operate in the supercritical region, the system will, thus, operate at a higher efficiency since the volumetric flow reduction is larger at sub-critical conditions. Further HFC's can provide refrigeration to the feed and the main liquefaction refrigerant in several boiling stages which allows the system to match the cooling curve to an arbitrary degree of closeness thereby resulting in higher efficiencies.

The HFC may be used to provide condensing duties at lower temperatures than propane for a hydrocarbon scrub column reflux, thereby simplifying the design of the liquefaction plant and taking a portion of the load off the hydrocarbon mixed refrigerant. This relief of the hydrocarbon mixed refrigerant will improve the efficiency of the system and reduce the size and capital cost of the expensive cryogenic section of the plant. Moreover, simpler and more cost effective process configurations may be used over a wider range of feed compositions and product specifications.

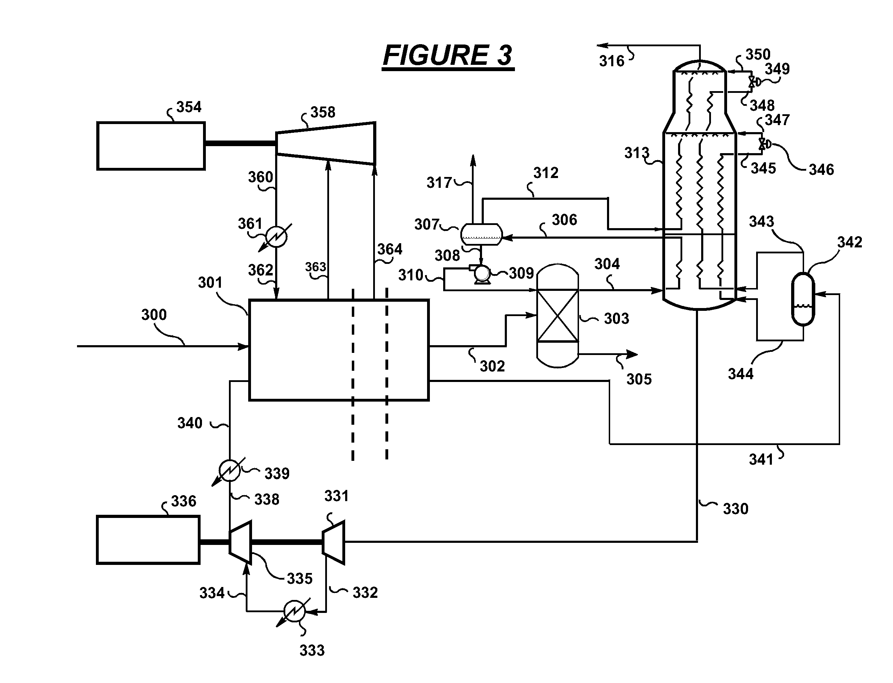

In another embodiment as illustrated in Figure 3, the HFC pre-cooling system is not used for supplying the condensing duty for the scrub column 303. Instead, the hydrocarbon rich mixed refrigerant is used for supplying the condensing duty for the scrub column 303. The dehydrated natural gas feed stream 300 is pre-cooled in two to four pre-cooling stages in pre-cooling apparatus 301 to yield a pre-cooled stream 302. The temperature of pre-cooled stream 302 depends upon the reflux rate in the scrub column 303 and the level of hydrocarbon removal required. For a given reflux rate, lowering the temperature of the pre-cooled stream 302 increases the hydrocarbon removal rate in the column. The overhead stream 304 exiting the scrub column 303 enters the main liquefaction exchanger 313 where it is cooled and partially liquefied resulting in stream 306. Stream 306 is phase-separated in the scrub column reflux drum 307 resulting in streams 308 and 312. Stream 308 is pumped in pump 309 and then sent via stream 310 to the scrub column 303 as column reflux. Stream 312 is re-inserted back into the main liquefaction exchanger 313 for liquefaction, to become LNG product stream 316. It should be noted that the remaining streams and apparatus shown in Figure 3 function similar to the equivalent 100 series streams and apparatus shown in Figure 1.

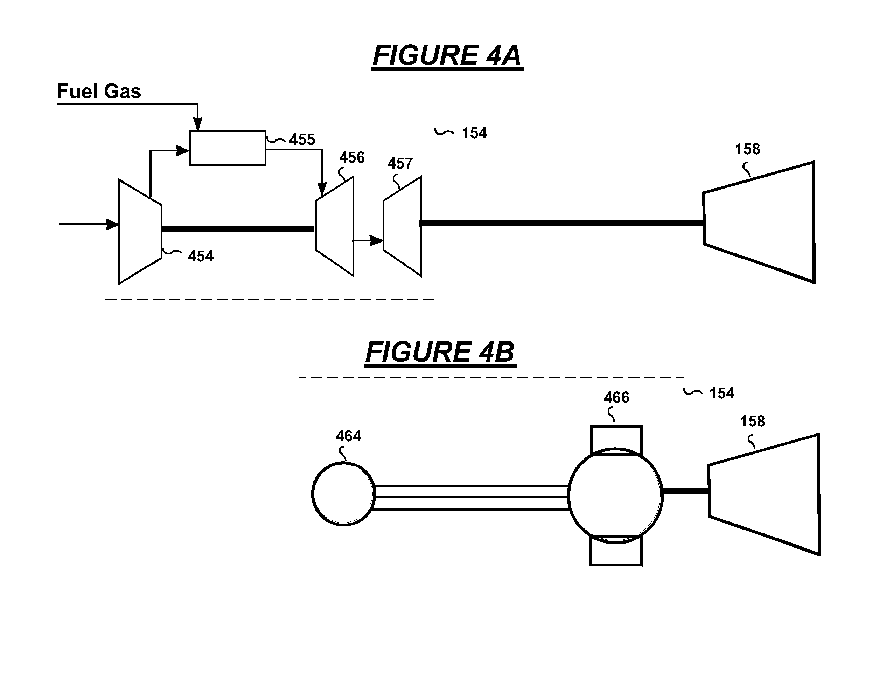

Figures 4A and 4B illustrate two HFC compressor driver configurations. Figure 4A shows a configuration in which the HFC compressor 158 is driven directly by a multi-shaft gas turbine driver 154 (also illustrated in Figure 1). Aero-derivative turbines such as LM2500, LM6000, or PGT25 are commercially available examples of multi-shaft turbines. The multi-shaft turbine driver 154 includes a gas generator 456 and a power turbine expander 457 on separate shafts. The power turbine 457 requires a high starting torque since it is loaded with the multi-stage HFC compressor 158 that is started without venting any HFC inventory. At start-up, the air compressor 454, driven by the gas generator 456, is allowed to develop full pressure before starting power turbine 457. Once the air compressor 454 develops full pressure, the still high pressure exhaust gas discharging from the gas generator 456 provides the required high starting torque to power turbine 457. In addition to having high starting torque, multi-shaft aero-derivative turbines also have significant speed flexibility due to the flexibility to control gas pressure at the exit of combustor 455, at the exit of gas generator 456, and at the exit of power turbine 457. Yet another way to provide a high starting torque for the HFC compressor 158 is to use a steam turbine directly coupled to the multi-stage HFC compressor 158.

Figure 4B illustrates an electric motor driven multi-stage HFC compressor 158.
The motor 466 is supplied power from a power supply 464 either through connectivity with the power grid on the FPSO or through connectivity with an electrical generator driven by a multi-shaft gas turbine. There may be a variable speed drive (VSD) that controls the current, voltage, and frequency across the stator coils of the motor to prevent coil damage as well as prevent instability in the grid. For a typical motor, the starting torque (or rotor lock-up torque) is proportional to $\varphi \times I_{Rot}$ where $\varphi$ is the magnetic flux intensity from the stator coils and $I_{Rot}$ is the rotor induced current. In turn $\varphi$ is proportional to the stator voltage. At zero rotor speed, $I_{Rot}$ is proportional to the frequency of rotation of the stator field which in turn is determined by the frequency of the input stator voltage and the number of stator poles (i.e., 120 x (f/p)) where f = frequency of the input stator voltage and p = number of stator poles. Hence, by applying a sufficiently high frequency and voltage in the stator windings, the rotor can be imparted a starting torque that overcomes load torque consisting of the compressor and the HFC gas that is contained within it. Variable Frequency Drive (VFD) technologies may be used to adjust the input frequency to the stator coils while maintaining the voltage-to-frequency ratio with the goal of providing sufficiently high starting torque.

A concern with HFC compressors occurs due to the HFC's higher molecular weights in comparison to conventional pre-cooling refrigerants used in LNG service like propane, for example. While propane has a molecular weight of 44.096, an HFC like R410A, which satisfies toxicity, flammability, low temperature glide, and other desired properties, has a molecular weight of 72.58. It is well-known that the velocity of sound in a fluid is calculated by:

$$C = \left( \frac{\gamma.R.T}{MW} \right)^{0.5} \qquad (1)$$

where $\gamma$ = Adiabatic exponent of the HFC, R = Universal Gas constant (8.314 J/Mol K), T = Temperature of HFC at any point within the compressor, and MW = Molecular weight of HFC. The velocity of sound (C) varies inversely with the square root of the molecular weight of the fluid. Higher molecular weight refrigerants, therefore, give rise to lower sonic velocities. Most compressor designs limit the impeller tip mach number (Ma) to sub-sonic levels (i.e. less than 1.0). Ma is calculated by:

$$Ma = \Pi \times RPM \times Tip\ Diameter\ /\ C \qquad (2)$$

where RPM = Revolutions Per Minute of the impeller, n = 3.14159, and C = Velocity of sound as calculated from the equation (1). In order to limit Ma to sub-sonic levels (i.e. less than 1.0), either the compressor must be run at a low enough speed (RPM) or the impeller diameter must be low.

Running the compressor at low speeds and/or using smaller impeller diameters, however, limits the theoretical polytrophic pressure ratio per stage as shown by the well-established centrifugal compressor expression:

$$\frac{P_{Out}}{P_{In}} = \left\{ 1 + \frac{(n-1).MW}{n.Z_{Avg}.R.T_{In}}.U_T.V_{t,Out} \right\}^{\frac{n}{(n-1)}} \qquad (3)$$

where n = HFC Polytrophic co-efficient, $Z_{Avg}$ = Average HFC Compressibility Factor, R = Universal Gas Constant (8.314 J/mol.K), $T_{In}$ = Temperature at inlet of impeller, $P_{In}$ = Pressure at inlet of impeller, MW = Molecular weight of the gas, and $V_{t,Out}$ = Absolute tangential velocity of HFC at the impeller tip. The above pressure ratio assumes that the flow into the impeller inlet passage has no tangential component. This velocity is given by the well-known expression obtained by the method of velocity triangles:

$$V_{t,Out} = \left( U_T - \frac{Q.\tan\beta}{\pi.D_T.b} \right) \qquad (4)$$

where Q = Volumetric Flow Rate, $\beta$ = Impeller tip angle with the radial direction, $D_T$ = Impeller tip diameter, and b = Impeller average flow channel width. The theoretical power input per unit mass required is given by:

$$\text{Power per Stage} = V_{t,Out} \times U_T. \qquad (5)$$

To achieve higher pressure ratios required to reach the condensing pressure of the HFC, several impeller-diffuser (wheels) stages may be required which implies that there may need to be several compressor casings which adds to the capital cost of the plant. It was determined, however, that single casing HFC compressors can be designed for HFC's like R410A. Table 3 shows the impact of differing HFC's and their comparison with conventional pre-cooling refrigerants like propane on the pressure ratio of a stage for a flow with Q = 75,000 $m^3$/h, $T_{In}$ = 10.00°C, and $P_{In}$ = 2.92 bara which is typical for one of the pressure levels of an HFC pre-cooled process.

**Table 3**

| Type | Component | Mol Wt. | Gamma | Z | C (m/s) | Ut (m/s) | Tip Ma | Vt (m/s) | Pout/Pin |
|---|---|---|---|---|---|---|---|---|---|
| Propane | $C_3H_8$ | 44.10 | 1.17 | 0.94 | 249.66 | 115.45 | 0.46 | 69.48 | 1.17 |
| R410A | F32/F125 | 72.37 | 1.21 | 0.96 | 197.95 | 115.45 | 0.58 | 69.48 | 1.29 |
| R134a | $C_2H_2F_4$ | 102.03 | 1.15 | 0.93 | 163.05 | 115.45 | 0.71 | 69.48 | 1.44 |
| R125 | $C_2HF_5$ | 120.02 | 1.13 | 0.95 | 148.71 | 115.45 | 0.78 | 69.48 | 1.53 |

For the above analysis, the impeller angle $\beta$ was 20 degrees, the tip diameter was 1.05 m and the average channel width was 0.05 m. The impeller rotated at 2100 RPM. The stage is assumed to be approximately isentropic for simplicity of demonstration. This is especially true for low values of $\beta$ which avoids separation of the boundary layer along the length of the compressor blade flow passage.

Table 3 illustrates that for this impeller geometry and identical inlet flow conditions, the Mach number increases with an increase in molecular weight. Table 3 also illustrates that the stage pressure ratio is strongly dependent upon the molecular weight. A compressor achieves higher pressure ratio with HFC's in comparison to propane for the same inlet volumetric flow, temperature, and pressure. Table 3 shows significant advantage of some HFC's like R410A over conventional refrigerants like propane in terms of higher pressure ratios per stage for the same compressor geometry and input power.

Examples

In this exemplary illustration, a dehydrated natural gas feed stream 100 was liquefied to form LNG using the HFC pre-cooled mixed refrigerant process. The total dehydrated natural gas feed stream 100 entering the pre-cooling section was around 2.39 million tonnes per annum (mmtpa) or 301.2 US tons per hour (tph). The dehydrated natural gas feed stream 100 from the drier beds (not shown in Figure 1) entered the HFC cooled evaporator 222 at 15°C and 68.95 bara where it was cooled to a temperature of -4.06°C. The feed was further cooled in evaporator 226 to a temperature of approximately -24.39°C after which it was sent to the scrub column 103 as stream 102. The cold reflux stream 111 in the scrub column 103 caused the stripping of the C3+ (propane, butanes, pentane etc.) hydrocarbons from the input stream 102 to yield a vapor overhead stream 104 and a bottoms heavy hydrocarbon stream 105.

Table 4 summaries the various stream conditions from the exemplary illustration:

**Table 4**

| Stream | | 102 | 104 | 105 |
|---|---|---|---|---|
| Flow | lbmol/h (kgmol/h) | 38,298.94 (17,372.11) | 35,757.67 (16,219.40) | 4,819.31 (2,186.00) |
| Temperature | °C | -24.38 | -27.56 | -24.47 |
| Pressure | bara | 68.31 | 68.27 | 68.29 |
| Vapor Percent | % | 89.40 | 100.00 | 0.00 |
| Dew Point | °C | | -27.56 | |
| Bubble Point | °C | -57.90 | | -24.47 |
| Nitrogen | Mole % | 0.95 | 1.01 | 0.22 |
| Methane | Mole % | 85.32 | 89.11 | 48.04 |
| Ethane | Mole % | 6.81 | 6.33 | 14.02 |
| Propane | Mole % | 3.73 | 2.66 | 15.61 |
| Isobutane | Mole % | 0.48 | 0.22 | 2.90 |
| n-Butane | Mole % | 1.63 | 0.59 | 10.73 |
| Isopentane | Mole % | 0.35 | 0.04 | 2.69 |
| n-Pentane | Mole % | 0.36 | 0.03 | 2.78 |
| Hexane | Mole % | 0.38 | 0.00 | 3.01 |
| Carbon Dioxide | Mole % | 0.01 | 0.01 | 0.01 |

The heavy hydrocarbon stream 105 was typically led to a de-methanizer column where lighter components like methane and ethane were ejected to produce additional fuel gas while the remaining stream rich in C3+ was either further fractionated or stored and shipped. Stream 107 entered the evaporator 230 to cool it to -44.39°C to generate partially condensed stream 108, the liquid portion (stream 111) of which was used as scrub column reflux 103, while the vapor stream 114 was sent to the main liquefaction exchanger 115.

Table 5 contains the summary of streams 108, 111, and 114 around the scrub column condenser 110.

**Table 5**

| Stream | | 108 | 114 | 111 |
|---|---|---|---|---|
| Flow | lbmol/h (kgmol/h) | 30,394.02 (13,796.50) | 33,479.63 (15,186.10) | 2,278.04 (1,033.30) |
| Temperature | °C | -44.39 | -42.30 | -42.30 |
| Pressure | Bara | 67.79 | 67.79 | 67.79 |
| Vapor Percent | % | 91.89 | 100.00 | 0.00 |
| Dew Point | °C | | -42.30 | |
| Bubble Point | °C | -52.30 | | -42.30 |
| Nitrogen | Mole % | 0.95 | 1.01 | 0.22 |

(continued)

| | | | | |
|---|---|---|---|---|
| Methane | Mole % | 85.32 | 89.11 | 48.04 |
| Ethane | Mole % | 6.81 | 6.33 | 14.02 |
| Propane | Mole % | 3.73 | 2.66 | 15.61 |
| Isobutane | Mole % | 0.48 | 0.22 | 2.90 |
| n-Butane | Mole % | 1.63 | 0.59 | 10.73 |
| Isopentane | Mole % | 0.35 | 0.04 | 2.69 |
| n-Pentane | Mole % | 0.36 | 0.03 | 2.78 |
| Hexane | Mole % | 0.38 | 0.00 | 3.01 |
| Carbon Dioxide | Mole % | 0.01 | 0.01 | 0.01 |

Table 5 shows that the vapor stream 114, at its dew point, was sent to the main liquefaction exchanger 115 where it was fully condensed and sub-cooled against hydrocarbon rich mixed refrigerant streams in order to yield stream 116 at a temperature of -152.72°C. Stream 116 was then expanded in an LNG hydraulic expander (details not shown) to extract some power as well as further expanded it in a J-T valve to around 1.17-1.38 bara generating flash gas and a final LNG product.

The composition of the hydrocarbon rich mixed refrigerant (HMR) stream 130 was 16.6 mole % $N_2$, 40.99 mole % $CH_4$, and 42.4 mole % $C_2H_6$, with a total flow of 65,758 lbmol/h (29,827 kgmol/h). This mixture had a dew point of -62.28°C and a bubble point of -157.87°C. Warm HMR stream 130 (where T=-59.5°C, P=8.47 bara) was led to the suction of the low pressure compressor 131. Two inter-cooled compression stages boosted its pressure to yield stream 138 (T=46.50°C, P=61.33 bara) with a dew point of -10.33°C and a bubble point of -76.89°C. The HMR stream, therefore, was further cooled to -76.89°C to convert it into a saturated liquid and further sub-cooled to provide the required cryogenic refrigeration temperatures. This cooling was done using aftercooler 139, HFC in evaporators 242, 246, 250, and the boiling HMR in the main liquefaction exchanger 115. HMR stream 141 exited the lowest temperature HFC evaporator 250 at -44.39°C and 59.23 bara. The partly condensed stream 141 was phase-separated in drum 142 to yield a lighter hydrocarbon HMR stream 143 and a heavier HMR stream 144. Stream 143 was then condensed and sub-cooled in the main liquefaction exchanger 115 to yield the cold refrigerant stream 148 while stream 144 was sub-cooled to yield the refrigerant stream 145. Streams 145, 148 were further expanded in J-T valves 146, 149 to yield the low pressure refrigerant streams 147, 150 that are then re-introduced into the main liquefaction exchanger 115 to provide refrigeration to the feed stream 114 and HMR streams 143, 144.

Table 6 shows the stream conditions of various HMR streams in this circuit.

**Table 6**

| Stream | | 130 | 140 | 141 | 143 | 144 |
|---|---|---|---|---|---|---|
| Flow | lbmol/h (kgmol/h) | 65,758.04 (29,827.34) | 65,758.04 (29,827.34) | 65,758.04 (29,827.34) | 24,816.49 (11,256.57) | 40,941.55 |
| Temperature | °C | -59.50 | 15.00 | -44.42 | -44.50 | -44.50 |
| Pressure | bara | 8.47 | 60.73 | 59.23 | 59.03 | 59.03 |
| Vapor Percent | % | 100.00 | 100.00 | 37.62 | 100.00 | 0.00 |
| Dew Point | °C | -62.28 | -10.53 | -11.04 | -44.50 | 3.46 |
| Bubble Point | °C | -157.87 | -77.65 | -79.60 | -99.04 | -44.50 |
| Nitrogen | Mole % | 16.58 | 16.58 | 16.58 | 30.92 | 7.89 |
| Methane | Mole % | 40.99 | 40.99 | 40.99 | 51.12 | 34.85 |
| Ethane | Mole % | 42.43 | 42.43 | 42.43 | 17.95 | 57.26 |

The HFC pre-cooling loop is now described. Referring to Figure 2, there were 3 stages of evaporation. The first stage included evaporators 222, 242 that cool the dehydrated natural gas feed stream 100 and HMR stream 140 to -4.06°C by boiling R410A streams 221, 241 supplied at -7.11°C and 6.38 bara. The vapor streams 223, 243 from the evaporators 222, 242 respectively are sent to the high pressure suction of R410A compressor 158. The un-evaporated liquid streams 224, 244 were isenthalpically flashed down to 3.03 bara and -27.39°C resulting in respective streams 225, 245. These streams were sent respectively to evaporators 226, 246 to cool the feed and mixed refrigerant down to -24.39°C. The vapor streams 227, 247 leaving evaporators 226, 246 were led to the mid-pressure suction nozzle of R410A compressor 158. The liquid streams 228, 248 leaving evaporators 226, 246 were isenthalpically flashed down to 1.25 bara and -47.39°C resulting in low pressure refrigerant streams 229, 249 respectively. Streams 229, 249 were completely vaporized to streams 231, 251 respectively and sent to the low pressure inlet nozzle of R410A compressor 158. The R410A compressor 158 was a 3-stage machine which compressed the low 165, mid-level 164, and high 163 pressure vapor streams to a final pressure of 15.58 bara and 65.11°C in stream 160. Stream 160 was then de-superheated, condensed, and sub-cooled against sea water in exchanger 161 to yield the condensed R410A stream 162 at 13.58 bara and 15°C and re-circulated to the R410A evaporators completing the refrigeration loop. In this case the total circulation rate of the R410A was 46,119 lbmol/h (20,919 kgmol/h).

The total LNG production was about 2.39 million metric tons (tonnes) per annum (mmtpa). The R410A compressor 158 required 27 MW. The inter-stage cooled MR compressors 133 and 135 required 40.5 MW. A specific power of approximately 270.26 kWh/ton (245.18 kWh/tonne) was realized.

Various turbines suitable for the marine environment or electric motors may be used as drivers. For instance, a GE LM6000 at 26 C yielding de-rated power output of about 28 MW can be used as a driver for the R410A compressor 158 as well as 2x50% MR compressor strings. Gear boxes may be utilized to adjust the speed of the R410A compressor which tends to run at a lower speeds due to impeller tip Mach number restrictions.

A hydrofluorocarbon within a pure fluid cascade process consisting of a plurality of refrigeration loops similar to the ConocoPhillips cascade process outlined in U.S. Patent No. 5,669,234 may also be used. This process involves three cooling loops: (1) a pre-cooling loop using propane which pre-cools the feed and a lower boiling refrigerant like ethane or ethylene; (2) an intermediate cooling loop using ethane as refrigerant that cools the feed further and a lower boiling refrigerant like methane; and (3) a sub-cooling loop that uses methane as refrigerant and sub-cools the feed to LNG temperatures. In one embodiment, the propane in the pre-cooling loop of the cascade cycle may be replaced with one of the HFC refrigerants. The ethane in the cascade loop with a normal boiling point of -89°C may be replaced by a lower boiling HFC like R23 ($CHF_3$) with a normal boiling point of -82.1°C.

The process of Figure 1 was also used to compare the energy efficiencies in terms of kWh/ton (kWh/tonnes) LNG, obtained from three different pre-cooling refrigerants: R410A, propane, and $CO_2$ with and without the use of propane in the mixed refrigerant. The feed flow rate was maintained fixed and the total power consumption of the pre-cooling and mixed refrigerant compressors was minimized. For uniformity of comparisons, the pre-cooling temperatures were set to at least -37°C in order to condense sufficient amounts of hydrocarbons from the dehydrated natural gas feed stream 100. In some cases, the optimal pre-cooling temperatures were found to be lower than -38°C. Table 7 shows these results.

The first three processes included propane in the mixed refrigerant. The next three processes illustrate having no propane in the mixed refrigerant. For the final three processes, it was assumed from Table 5 (stream 114) that the methane stream used to prepare the mixed refrigerant contains 2.66 mole % propane. It was also assumed that an on-site de-ethanizer column may be used for producing an ethane stream that contains 1.0% propane and 99.0% ethane, which is typical in the industry. A typical mixed refrigerant with a composition of 40.99 % methane and 42.4 % ethane will result in a propane content of 0.4099 x 2.66 + 0.424 x 1.00 = 1.51 mole %.

**Table 7**

| ASHRAE Toxicity & Flammability Index | Pre-cooling Refrigerant | Liquefaction Refrigerant | Specific Power (kWh/ton (kWh/tonnes) LNG) | Mole % Propane in MR | Temperature of Streams 229 and 249 (C) | Pressure of Streams 229 and 249 (bara) |
|---|---|---|---|---|---|---|
| A1 | $CO_2$ | MR (with propane) | 262.26 (237.92) | 11.80 | -37.09 | 11.17 |
| A3 | Propane | MR (with propane) | 250.89 (227.60) | 12.42 | -37.36 | 1.24 |
| A1 | R410A | MR (with propane) | 249.09 (217.81) | 9.93 | -37.29 | 1.99 |
| A1 | $CO_2$ | MR (without propane) | 270.91 (245.77) | 0.00 | -37.22 | 11.12 |

(continued)

| ASHRAE Toxicity & Flammability Index | Pre-cooling Refrigerant | Liquefaction Refrigerant | Specific Power (kWh/ton (kWh/tonnes) LNG | Mole % Propane in MR | Temperature of Streams 229 and 249 (C) | Pressure of Streams 229 and 249 (bara) |
|---|---|---|---|---|---|---|
| A3 | Propane | MR (without propane) | 256.59 (232.77) | 0.00 | -37.36 | 1.24 |
| A1 | R410A | MR (without propane) | 251.96 (228.57) | 0.00 | -38.55 | 1.82 |
| A1 | CO$_2$ | MR (with limited propane) | 273.76 (248.35) | 1.51 | -37.76 | 10.90 |
| A3 | Propane | MR (with limited propane) | 254.65 (231.01) | 1.51 | -36.77 | 1.27 |
| A1 | R410A | MR (with limited propane) | 250.44 (227.20) | 1.51 | -39.01 | 1.78 |

First, the processes using CO$_2$ had a specific power consumption approximately 5-9% higher than the ones not using CO$_2$, rendering the former less efficient than processes based upon R410A and propane pre-cooling. Second, the specific power of the process using R410A mixed refrigerant (excluding propane) was about 0.42% higher than that of the process using C3MR (including propane). Process C3MR (including propane) was used for large land-based plants with the highest possible energy efficiency. This comparison demonstrates that the power penalty incurred in eliminating propane entirely from the liquefaction cycle was insignificant and that the energy efficiency of the R410A based process may be considered to be comparable to the most efficient land-based plants. Third, the reduction of propane inventory was significant since the optimized mixed refrigerant composition for the processes using propane in the mixed refrigerant involves 9-12 mol % propane. Propane inventory and capital costs are also further reduced by eliminating the distillation column and storage typically provided to make propane.

Embodiments of the current invention could also be applied to replacing the hydrocarbon mixed refrigerant mixture with a mixture of HFC components and hydrocarbons and an inert gas like N$_2$. In such a process, pre-cooling would be performed by a constant boiling refrigerant (such as a single component HFC or an azeotropic HFC) while the liquefaction and sub-cooling of the feed would be performed using a mixture of HFC components and nitrogen. The propane in the hydrocarbon mixed refrigerant mixture could be replaced by an HFC like R410A or R134A, for example. The ethane could be replaced by R23 and the methane could be replaced by R14. In such a process, the HFC mixed refrigerant would be compressed and cooled with air or sea water resulting in partially condensed refrigerant which would be separated to yield a nitrogen and low boiling point rich vapor (stream 143 in Figures 1 and 3) and a high boiling HFC rich liquid (144 in Figures 1 and 3). The vapor and the liquid would then be further cooled and then expanded to provide refrigeration to the feed.

It should also be noted that because the HFC refrigerant may be used to replace the propane refrigerant in the traditional C3MR process, the vast experience with the design and operation of the C3MR process can, therefore, be still exploited. For example, the HFC pre-cooling refrigerant loop consists of several evaporators in series whose operation is well-established in the traditional C3MR system and process.

Finally, it has been verified that single casing compressors with side-streams can be designed for HFC service running at speeds between 1700-5000 RPMs which is the normal operating range for a vast array of commercially available low heat rate aero-derivative turbines.

While aspects of the present invention has been described in connection with the preferred embodiments of the various figures, it is to be understood that other similar embodiments may be used or modifications and additions may be made to the described embodiment for performing the same function of the present invention without deviating therefrom. Therefore, the claimed invention should not be limited to any single embodiment, but rather should be construed in breadth and scope in accordance with the appended claims.

**Claims**

1. A method for liquefying a natural gas stream, the method comprising the steps of:

   pre-cooling a dehydrated natural gas stream in a pre-cooling apparatus, wherein the pre-cooling is performed by using a pre-coolant that consists essentially of a hydrofluorocarbon (HFC) refrigerant;
   further cooling the pre-cooled dehydrated natural gas stream in a main heat exchanger through indirect heat exchange against a vaporized hydrocarbon mixed refrigerant coolant to produce a liquefied natural gas product stream,
   wherein the mixed refrigerant coolant comprises ethane, methane and nitrogen.

2. The method of Claim 1, wherein the mixed refrigerant coolant comprises ethane, methane, nitrogen, and less than or equal to 3 mol % of propane.

3. The method of Claim 1 or 2, wherein the mixed refrigerant coolant is a mixture comprising a methane stream derived from a natural gas stream, an ethane enriched stream, wherein the ethane enriched stream is predominantly ethane (i.e. comprises at least 90 mole % ethane), and a nitrogen stream, wherein the nitrogen stream is predominantly nitrogen (i.e. comprises at least 97 mole % nitrogen and a dew point lower than -40°C).

4. The method of any one of the preceding claims, wherein the method for liquefying the natural gas stream occurs on a Floating Production Storage and Offloading platform (FPSO).

5. The method of any one of the preceding claims, wherein the mixed refrigerant coolant comprises less than 2 mol % of propane.

6. The method of claim 5, wherein the mixed refrigerant coolant comprises less than 1 mol % of propane.

7. The method of any one of the preceding claims, wherein the hydrofluorocarbon refrigerant is R410A.

8. The method of any one of the preceding claims, wherein the hydrofluorocarbon refrigerant has a temperature glide of less than or equal to 7°C.

9. The method of any one of the preceding claims, further comprising feeding the pre-cooled dehydrated natural gas stream to a scrub column where the pre-cooled dehydrated natural gas stream is rectified and stripped of a portion of the heavy hydrocarbons present in the pre-cooled dehydrated natural gas stream, feeding the rectified and stripped natural gas stream from the scrub column back into the pre-cooling apparatus where the rectified and stripped natural gas stream is further cooled and partially condensed, separating in a separator the cooled and partially condensed natural gas stream, where the liquid portion of the natural gas stream is pumped and then sent to the scrub column as a reflux stream, and where the vapor portion of the natural gas stream is sent to the main heat exchanger to produce the liquefied natural gas product stream.

10. The method of any one of the preceding claims, further comprising pre-cooling the hydrocarbon mixed refrigerant coolant in the pre-cooling apparatus prior to vaporization in the main heat exchanger.

11. The method of any one of the preceding claims, further comprising developing pressure in an air compressor driven by a gas generator prior to starting a power turbine, wherein the power turbine drives a multi-stage HFC compressor for pre-cooling of at least the dehydrated natural gas stream for liquefaction; and
    using a high temperature, high pressure gas discharged from the gas generator to provide the required high starting torque to the power turbine,
    wherein the starting of the power turbine occurs without venting of the HFC refrigerant.

12. A system for liquefying a natural gas stream by a method according to any one of the preceding claims, comprising:

    a multistage hydrofluorocarbon (HFC) compressor;
    a pre-cooling apparatus fluidly connected to the multistage HFC compressor, the pre-cooling apparatus comprising at least one evaporator for pre-cooling a dehydrated natural gas stream using a HFC refrigerant;
    a main heat exchanger fluidly connected to the pre-cooling apparatus for further cooling the pre-cooled dehydrated natural gas stream to produce a liquid natural gas product stream,

wherein a vaporized mixed refrigerant coolant comprising ethane, methane and nitrogen provides refrigeration in the main heat exchanger.

13. The system of claim 12, further comprising a multi-shaft gas turbine driver for supplying the power to the multistage HFC compressor, the multi-shaft gas turbine driver comprising:

a power turbine connected to the multistage HFC compressor on a first shaft;
a gas generator fluidly connected to the power turbine, said gas generator being on a second shaft;
an air compressor connected to the gas generator on the second shaft;
and
a combustor fluidly connected to the air compressor and the gas generator for supplying a high temperature, high pressure gas to the gas generator.

14. The system of claim 12, further comprising an electrical motor assembly for supplying the power to the multistage compressor, the electrical motor assembly comprising:

an electrical motor connected to the multistage HFC compressor;
a power supply connected to the electrical motor.

15. The system of claim 14, wherein the power supply of the electrical motor is a power grid of a Floating Production Storage and Offloading platform (FPSO) or an electrical generator driven by a multi-shaft gas turbine.

16. The system of any one of claims 12 to 15, wherein:

the evaporator is a shell-and-tube type evaporator; and/or
the main heat exchanger is a wound coil exchanger.

17. The system of any one of claims 12 to 16, further comprising a conduit between the main heat exchanger and the pre-cooling apparatus to feed the mixed refrigerant coolant to the pre-cooling apparatus prior to vaporization of the mixed refrigerant coolant in the main heat exchanger.

FIGURE 1

EP 2 251 625 A2

**FIGURE 2**

FIGURE 3

EP 2 251 625 A2

FIGURE 4A

Fuel Gas

454 455 456 457 154 158

FIGURE 4B

464 466 154 158

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5669234 A


**Non-patent literature cited in the description**

- Gas Processors Supplier Association (GPSA) Engineering Data Book. 1998, vol. I